# EUROPEAN PATENT APPLICATION

(11) **EP 3 518 501 A1**
(43) Date of publication of application: **31.07.2019**
(21) Application number: 18207286.8
(22) Date of filing: 02.02.2012
(51) Int. Cl.: H04L 29/08, H04W 72/00, H04W 88/08, H04W 4/00, H04W 80/00, H04W 80/10

(54) **INTERNET OF THINGS INFORMATION PROCESSING METHOD, BASE STATION, AND INTERNET OF THINGS SYSTEM**

(30) Priority: 14.03.2011 CN 201110061277
(62) Divisional of application: 12757845.8
(71) Applicant: Huawei Technologies Co., Ltd., Shenzhen, Guangdong 518129 (CN)
(72) Inventor: YANG, Hui, Shenzhen, Guangdong 518129 (CN); MA, Jie, Shenzhen, Guangdong 518129 (CN)
(74) Representative: Pfenning, Meinig & Partner mbB

(57) **Abstract**

Embodiments of the present invention provide an internet of things information processing method, a base station, and an internet of things system. The embodiments of the present invention provide an internet of things information processing method, including: receiving, by a base station, uplink data sent from an internet of things terminal; if the uplink data meets a local decision condition of the base station, performing, by the base station, local decision processing according to the uplink data. In the embodiments of the present invention, a base station that is comparatively close to the internet of things terminal is adopted to perform local decision processing, which can shorten latency of decision processing and ensure service quality of the internet of things.

## Description

### CROSS-REFERENCE TO RELATED APPLICATION

This application claims priority to Chinese Patent Application No. 201110061277.1, filed with the Chinese Patent Office on March 14, 2011, and entitled "INTERNET OF THINGS INFORMATION PROCESSING METHOD, BASE STATION, AND INTERNET OF THINGS SYSTEM", which is incorporated herein by reference in its entirety.

### TECHNICAL FIELD

Embodiments of the present invention relate to the communication field, and in particular, to an internet of things information processing method, a base station, and an internet of things system.

### BACKGROUND

As the communication technology and computer technology constantly develop, the concept of the internet of things emerges as the times require. The internet of things aggregates the perceptive technology, modern network technology, artificial intelligence and automation technology, communication technology, and computer technology, enabling people to intellectually communicate with things and thereby creating an intellectual world.

From the perspective of communication, the internet of things is a platform based on collection, processing, release, exchange, analysis, and scheduling decision of the information of these application fields and in which information exchange is directly performed with an internet of things terminal. The internet of things is widely applied. For example, it may be applied to a plurality of fields such as the smart grid, intelligent traffic, intelligent logistics, video surveillance, and intelligent medical treatment. The existing internet of things mainly includes a wired manner and a wireless manner, where the wired manner mainly adopts the optical fiber communication technology, and the wireless manner mainly adopts the mobile communication technology. The mobile communication technology, due to its preferable operating expense advantages, is gradually becoming a future development direction of an internet of things application communication network.

However, when the existing internet of things adopting the mobile communication technology performs decision processing for uplink data sent from the internet of things terminal, latency is comparatively long, which reduces service quality of the internet of things.

### SUMMARY

A plurality of aspects of the present invention provides an internet of things information processing method, a base station, and an internet of things system.

One aspect of the present invention provides an internet of things information processing method, including: receiving, by a base station, uplink data sent from an internet of things terminal; and if the uplink data meets a local decision condition of the base station, performing, by the base station, local decision processing according to the uplink data.

Another aspect of the present invention provides a base station, including: a receiving apparatus, configured to receive uplink data sent from an internet of things terminal; a decision processing apparatus, configured for: if the uplink data meets a local decision condition of the base station, the base station to perform local decision processing according to the uplink data.

Another aspect of the present invention provides an internet of things system, including an access network and a core network, where a base station on the access network adopts the foregoing base station.

In the embodiments of the present invention, the base station may determine, after receiving the uplink data, whether the uplink data meets the local decision condition of the base station; if the local decision condition is met, the base station may perform local decision processing according to the uplink data. In the embodiments of the present invention, the base station that is comparatively close to the internet of things terminal is adopted to perform local decision processing, which can shorten latency of decision processing and ensure service quality of the internet of things.

### BRIEF DESCRIPTION OF DRAWINGS

To illustrate the technical solutions in the embodiments of the present invention or in the prior art more clearly, accompanying drawings required for describing the embodiments or the prior art are briefly introduced in the following. Apparently, the accompanying drawings in the following description are some embodiments of the present invention, and a person of ordinary skill in the art may further obtain other drawings according to these accompanying drawings without creative efforts.
FIG. 1 is a flowchart of an embodiment of an internet of things information processing method in the present invention;
FIG. 2 is a flowchart of another embodiment of an internet of things information processing method in the present invention;
FIG. 3 is a schematic structural diagram of an application management layer entity in the method embodiment shown in FIG. 2;
FIG. 4 is a flowchart of still another embodiment of an internet of things information processing method in the present invention;
FIG. 5 is a schematic diagram of a downlink data backup process of yet another embodiment of an internet of things information processing method in the present invention;
FIG. 6 is a schematic diagram of an uplink data backup process of yet another embodiment of an internet of things information processing method in the present invention;
FIG. 7 is a schematic structural diagram of an embodiment of a base station in the present invention;
FIG. 8 is a schematic structural diagram of another embodiment of a base station in the present invention;
FIG. 9 is a schematic structural diagram of an embodiment of an internet of things system in the present invention; and
FIG. 10 is a schematic structural diagram of double base stations of another embodiment of an internet of things system in the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

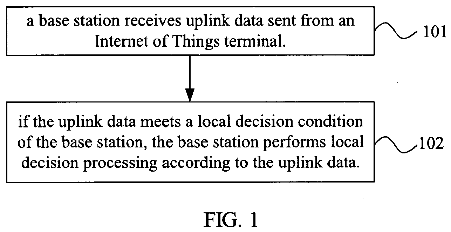

FIG. 1 is a flowchart of an embodiment of an internet of things information processing method in the present invention. As shown in FIG. 1, the method of the embodiment may include:
101. Abase station receives uplink data sent from an internet of things terminal.

On the internet of things adopting the mobile communication technology, the internet of things terminal may interact, through a base station on an access network, with a network side, such as a core network. Specifically, the internet of things terminal may send uplink data to the base station, and then the base station sends the uplink data to the core network so that a network element of the core network, such as a data acquisition monitoring system on the core network, may use the uplink data to perform corresponding processing. The uplink data may be sent from the internet of things terminal periodically, or sent from the internet of things terminal after being triggered by an event.

The uplink data of the embodiment may be any data required for the core network to manage, schedule, and decide the internet of things terminal. For example, the uplink data may be uplink data required when the core network performs application services for the internet of things terminal, where the application services may include data acquisition and monitoring (supervisory control and data acquisition, hereinafter briefly referred to as SCADA), fault detection, isolation, and recovery (fault detection, isolation, recovery, hereinafter briefly referred to as FDIR), voltage and reactive management (integrated Volt/NAR control, hereinafter briefly referred to as IVVC), phase angel measurement (phasor measurement unit, hereinafter briefly referred to as PMU), loading management, and so on.

102. If the uplink data meets a local decision condition of the base station, the base station performs local decision processing according to the uplink data.

In the prior art, the base station forwards the uplink data to the core network, and the network element of the core network performs decision processing according to the uplink data. For example, the base station may forward the uplink data to a SCADA system on the core network, and the SCADA system may perform decision processing according to the uplink data. It can be seen that, the prior art adopts centralized decision processing, and therefore, the decision process of the prior art needs to experience data transmission between network elements of the internet of things, which leads to long latency and the latency is even longer especially when the network element of the core network for completing decision processing is comparatively far from the internet of things terminal.

An experiment study shows that on the internet of things, processing of a plurality of decisions is not necessarily implemented by the network element of the core network, but may be completed by the base station. Only under the situation that the base station is incapable of performing local decision for the uplink data, the uplink data needs to be sent to the network element of the core network for decision processing. Base on the above, in the embodiment, the base station may determine, after receiving the uplink data, whether the uplink data meets the local decision condition of the base station, that is, the base station may determine whether it is capable of performing decision processing according to the uplink data. If the local decision condition is met, the base station may perform local decision processing according to the uplink data; if the uplink data does not meet the local decision condition, the base station sends the uplink data to the network element of the core network for the network element of the core network to perform decision processing. In view of above, the embodiment adopts distributed decision processing. Compared with the prior art that adopts the network element of the core network to perform decision processing, the base station is closer to the internet of things terminal and when the base station performs decision processing, latency of decision processing can be shortened and service quality of the internet of things can be ensured.

It should be noted that, because differences exist in the processing ability of the base station and network service functions borne by the base station, the embodiment does not need to limit a local decision condition, and the local decision condition is set by a person skilled in the art according to factors such as the property of the base station actually adopted in the internet of things and decision efficiency, as long as the base station is capable of acquiring all parameters required for performing local decision processing according to the uplink data. Additionally, the embodiment does not restrict a detailed implementation process in which the base station performs decision processing, and at least may adopt an implementation manner in which a network-side network element performs decision processing in the prior art. The details are not described herein again in the embodiment. Additionally, the network side is not restricted to the core network. A person skilled in the art may understand that the network side may be any network side on which a decision processing unit is deployed in the prior art.

Additionally, the internet of things terminal in the embodiment may include but is not limited to a power distribution network terminal, a traffic terminal, a logistics terminal, a video surveillance terminal, or a medical terminal.

In the embodiment, the base station may determine, after receiving the uplink data, whether the uplink data meets the local decision condition of the base station; if the local decision condition is met, the base station may perform local decision processing according to the uplink data. In the embodiment, the base station that is comparatively close to the internet of things terminal is adopted to perform local decision processing, which can shorten latency of decision processing and ensure service quality of the internet of things.

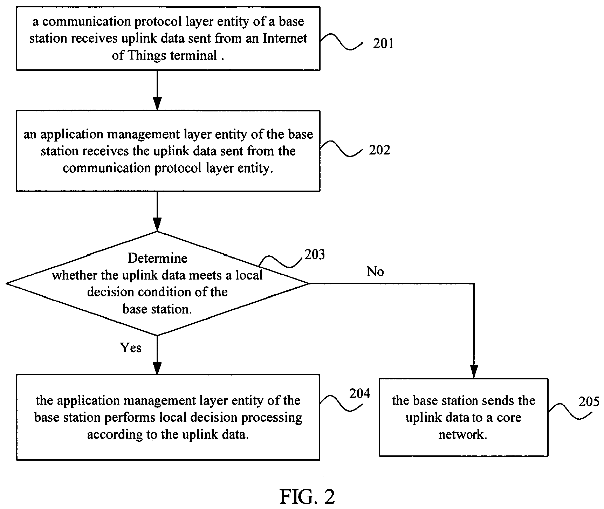

FIG. 2 is a flowchart of another embodiment of an internet of things information processing method in the present invention. As shown in FIG. 2, the embodiment refines the specific implementation process of the method embodiment shown in FIG. 1. During specific implementation, an application management layer entity may be added to a base station, so as to implement local decision processing through the application management layer entity. The method of the embodiment may include:
201. A communication protocol layer entity of a base station receives uplink data sent from an internet of things terminal.
202. An application management layer entity of the base station receives the uplink data sent from the communication protocol layer entity.

201 and 202 are the refinement of 101 shown in FIG. 1. Specifically, each existing base station has a communication protocol layer entity and the communication protocol layer entity may be configured to forward data, and the details are not described herein again in the embodiment. In the embodiment, an application management layer entity may be added to the upper layer of the communication protocol layer entity of the base station. The application management layer entity is configured to perform local decision processing for the received uplink data.

Specifically, the communication protocol layer entity of the base station may receive uplink data sent from the internet of things terminal. Then, the communication protocol layer entity may send the uplink data to the application management layer entity.

203. The application management layer entity of the base station determines whether the uplink data meets a local decision condition of the base station; if yes, perform 204, and if not, perform 205.

204. The application management layer entity of the base station performs local decision processing according to the uplink data.

205. The base station sends the uplink data to a core network.

The application management layer entity may determine whether the uplink data meets the local decision condition. If the local decision condition is met, the application management layer entity may perform local decision processing according to the uplink data; if the local decision condition is not met, the application management layer entity sends the uplink data to the core network so that a network element of the core network may perform decision processing according to the uplink data.

It should be noted that, the embodiment does not restrict a specific architecture of the application management layer entity, which may be designed by a person skilled in the prior art according to the need and details are not described herein again.

In the embodiment, the communication protocol layer entity of the base station may send, after receiving the uplink data, the uplink data to the application management layer entity, the application management layer entity may determine whether the uplink data meets the local decision condition of the base station. Under the situation that the local decision condition is met, the application management layer entity may perform local decision processing according to the uplink data; if not, the application management layer entity sends the uplink data to the core network for decision processing. In the embodiment, the base station that is comparatively close to the internet of things terminal is adopted to perform local decision processing, which can shorten latency of decision processing and ensure service quality of the internet of things. Meanwhile, the embodiment can implement the foregoing functions by merely adding the application management layer entity on the base of the existing base station architecture, and the implementation manner is comparatively simple.

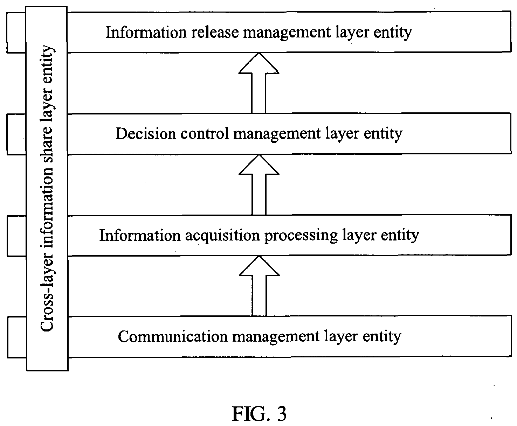

FIG. 3 is a schematic structural diagram of an application management layer entity in the method embodiment shown in FIG. 2. As shown in FIG. 3, the application management layer entity includes: a communication management layer entity, an information acquisition processing layer entity, a decision control management layer entity, an information release management layer entity, and a cross-layer information share layer entity, where the communication management layer entity, the information acquisition processing layer entity, the decision control management layer entity, and the information release management layer entity are in communication connection in sequence, and the cross-layer information share layer entity is in communication connection with the communication management layer entity, the information acquisition processing layer entity, the decision control management layer entity, and the information release management layer entity respectively, where the communication management layer entity is configured to receive the uplink data sent from the communication protocol layer entity and send the uplink data to the information acquisition processing layer entity; the information acquisition processing layer entity is configured to categorize and gather the uplink data, acquire the category and gathered data, and send the category and gathered data to the decision control management layer entity; the decision control management layer entity is configured to determine whether the category and gathered data meets the local decision condition of the base station; if yes, the decision control management layer entity performs local decision processing for the category and gathered data; the information release management layer entity is configured to receive a decision processing result sent from the decision control management layer entity and send the decision processing result to the internet of things terminal; additionally, the decision control management entity is further configured to: if the category and gathered data does not meet the local decision condition of the base station, send the category and gathered data to the information release management layer entity; the information release management layer entity is further configured to send the category and gathered data to a decision processing network element of a core network; and the cross-layer share layer entity is configured to provide share parameter information for the communication management layer entity, the information acquisition processing layer entity, and the decision control management layer entity.

The following uses a specific embodiment to detail an implementation process in which a base station performs decision processing based on the application management layer entity shown in FIG. 3.

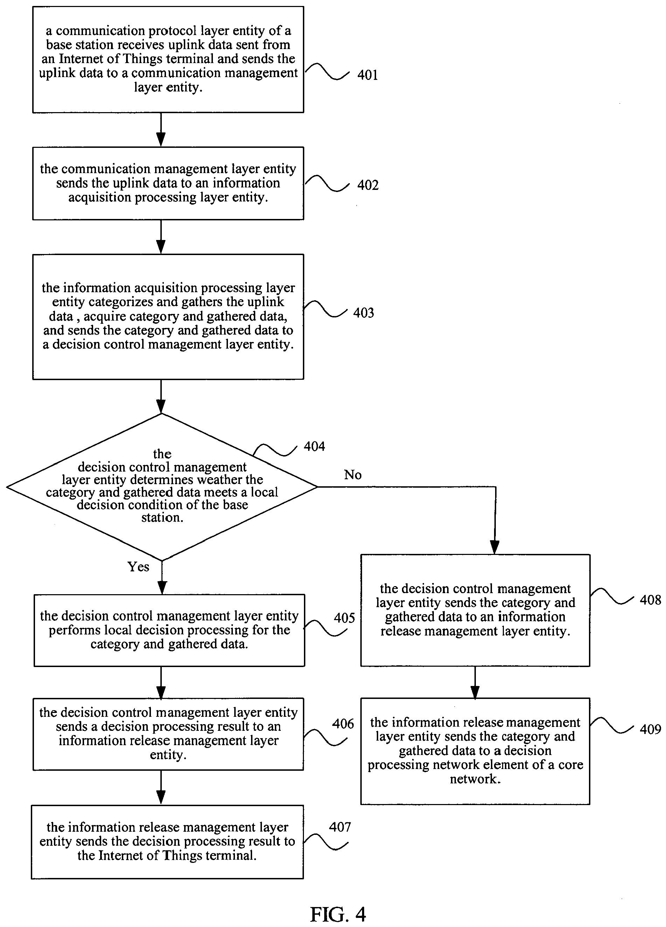

FIG. 4 is a flowchart of another embodiment of an internet of things information processing method in the present invention. As shown in FIG. 4, the method of the embodiment may include:
401. A communication protocol layer entity of a base station receives uplink data sent from an internet of things terminal and sends the uplink data to a communication management layer entity.
402. The communication management layer entity sends the uplink data to an information acquisition processing layer entity.

Specifically, the communication management layer entity may provide the base station with an adaptive interface between the communication protocol layer entity and an application management layer entity.

403. The information acquisition processing layer entity categorizes and gathers the uplink data, acquires the category and gathered data, and sends the category and gathered data to a decision control management layer entity.

Specifically, the information acquisition processing layer entity may categorize and gather, according to share parameter information provided by a cross-layer information share layer entity, the uplink data, where the share parameter information may include the correspondence between type information and an application service type of an internet of things terminal.

A power distribution network is used as an example of the internet of things, where the correspondence is shown in Table 1:

**Table 1**

| **Device Number** | **Type of Power Distribution Network Terminal** | **Application Service Type** |
|---|---|---|
| 1 | Breaker | FDIR |
| 2 | Relay | FDIR |
| 3 | Relay | FDIR |
| 4 | Sectionalizer | FDIR |
| 5 | Switch device | FDIR |
| 6 | Voltage regulator | IVVC |
| 7 | Voltage regulator | IVVC |
| ... | ... | ... |

A traffic network is used as an example of the internet of things, where the correspondence is shown in Table 2:

**Table 2**

| **Device Number** | **Type of Traffic Terminal** | **Application Service Type** |
|---|---|---|
| 1 | Private vehicle | Vehicle security control |
| 2 | Private vehicle | Vehicle security control |
| 3 | Public vehicle | Vehicle security control |
| 4 | Road camera | Traffic monitoring and control |
| 5 | Road camera | Traffic monitoring and control |
| 6 | Road camera | Traffic monitoring and control |
| 7 | Bus | Operation vehicle management |
| 8 | Taxi | Operation vehicle management |
| ... | ... | ... |

Specifically, the summary processing process may be: The information acquisition layer entity determines type information of an internet of things terminal according to the uplink data, determines, according to the correspondence, an application service type to which the type information corresponds, categorizes and gathers the uplink data of the same application service type. Table 1 is used as an example to illustrate that the information acquisition processing layer entity may determine, according to the uplink data, that a type of the internet of things terminal that sends the uplink data includes a relay, a sectionalizer, and a voltage regulator; therefore, the information acquisition processing layer entity may categorize and gather the uplink data of the relay and the sectionalizer into one category whose corresponding service type is FDIR and allocate and gather the uplink data of the voltage regulator into another category whose corresponding service type is IVVC. Therefore, the category and gathered data includes both the category and gathered data corresponding to FDIR and the category and gathered data corresponding to IVVC.

404. The decision control management layer entity determines whether the category and gathered data meets a local decision condition of the base station. If yes, perform 405; otherwise, perform 408.

For example, the decision control management layer entity may, perform the determining of 404 respectively for the category and gathered data corresponding to FDIR and the category and gathered data corresponding to IVVC, and its corresponding local decision condition varies.

405. The decision control management layer entity performs local decision processing for the category and gathered data.

406. The decision control management layer entity sends a decision processing result to an information release management layer entity.

The decision control management layer entity may perform local decision processing and acquire the decision processing result. For example, after the decision control management layer entity performs decision processing according to the category and gathered data corresponding to FDIR, the acquired decision processing result may be recovering the relay and the sectionalizer from an isolation state to a working state.

Thereafter, the decision control management layer entity sends the decision processing result to the information release management layer entity.

407. The information release management layer entity sends the decision processing result to the internet of things terminal.

The information release management layer entity is responsible for sending the decision processing result to the internet of things terminal. For example, the information release management layer entity may send the result information about recovering the relay and the sectionalizer from the isolation state to the working state or the similar prompt information to the relay and the sectionalizer for managing or invoking the relay and the sectionalizer on the power distribution network.

408. The decision control management layer entity sends the category and gathered data to the information release management layer entity.

409. The information release management layer entity sends the category and gathered data to a decision processing network element of a core network.

If the decision control management layer entity determines that the category and gathered data does not meet a local decision condition of the base station, that is, the decision control management layer entity is incapable of performing local decision processing, the decision control management layer entity sends the category and gathered data to the information release management layer entity, and then the information release management layer entity sends the category and gathered data to the decision processing network element of the core network.

It should be noted that the embodiment does not restrict which network element of the core network the decision processing network element specifically adopts. The information release management layer entity may send the category and gathered data to the decision processing network element according to the application service type of the category and gathered data. For example, if the application service type of the category and gathered data is traffic monitoring in Table 2, the information release management layer entity may send the category and gathered data to the SCADA system of the core network for decision processing.

The embodiment refines, based on the method embodiment shown in FIG. 2, the application management layer entity into five entities. The five entities may collaborate with the existing communication protocol layer entity of the base station to complete distributed decision processing. In the embodiment, the base station that is comparatively close to the internet of things terminal is adopted to perform local decision processing, which may shorten latency of decision processing and ensure service quality of the internet of things. Meanwhile, in the embodiment, the foregoing functions may be implemented by merely adding the application management layer entity on the base of the existing base station architecture, and the implementation manner is comparatively simple.

Additionally, when the network is laid out in the prior art, the communication reliability of the internet of things is not considered. Once a device on the internet of things fails to work, for example, a base station on an access network fails to work, the internet of things cannot normally perform communication. Therefore, the base station used by the method embodiment in FIG. 1, FIG. 2, or FIG. 4 may adopt one backup base station. Once the primary base station is faulty, the backup base station takes over the work of the primary base station. Data backup needs to be performed between the primary base station and the backup base station, that is, the primary base station needs to forward to the backup base station the downlink data sent from the core network and the uplink data sent from the internet of things, so as to ensure that the backup base station works normally. With respect to the structure of the application management layer entity shown in FIG. 3, the embodiment of the present invention may adopt the communication management layer entity to implement the process of data backup and forwarding.

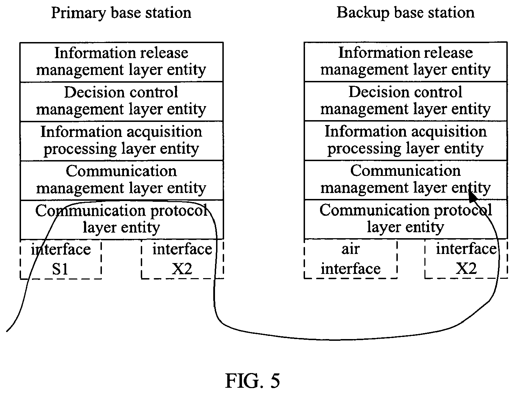

FIG. 5 is a schematic diagram of a downlink data backup process of another embodiment of an internet of things information processing method in the present invention. As shown in FIG. 5, a primary base station may receive downlink data sent from a core network and send the downlink data to a backup base station for backup. Specifically, for example, a communication protocol layer entity of the primary base station may receive downlink data from an S1 interface on a long term evolution (Long Term Evolution, hereinafter briefly referred to as LTE) network. The downlink data is sent through the communication protocol layer entity of the primary base station to a communication management layer entity of an application management layer entity of the primary base station; the communication management layer entity may transmit, after acquiring the downlink data, the downlink data to the communication protocol layer entity of the primary base station so that the communication protocol layer entity of the primary base station can forward the downlink data to the backup base station through an interface such as an X2 interface; a communication protocol layer entity of the backup base station may receive the downlink data through the X2 interface and transmit the downlink data to a communication management layer entity of the backup base station so that the backup base station can back up the downlink data.

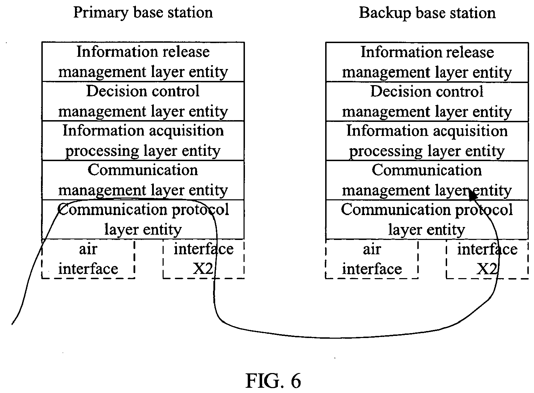

FIG. 6 is a schematic diagram of an uplink data backup process of yet another embodiment of an internet of things information processing method in the present invention. As shown in FIG. 6, a primary base station may receive uplink data sent from an internet of things terminal and send the uplink data to a backup base station for backup. Specifically, the communication protocol layer entity of the primary base station may receive uplink data through an air interface. The uplink data is sent through the communication protocol layer entity of the primary base station to a communication management layer entity of an application management layer entity of the primary base station; the communication management layer entity may transmit, after obtaining the uplink data, the uplink data to the communication protocol layer entity of the primary base station so that the communication protocol layer entity of the primary base station may forward the uplink data to the backup base station through an interface such as an X2 interface; a communication protocol layer entity of the backup base station may receive the downlink data through the X2 interface and transmit the uplink data to a communication management layer entity of the backup base station so that the backup base station may back up the uplink data.

For the situation where a switchover occurs due to a position change of the internet of things terminal, the primary base station after the switchover may receive related data of the internet of things terminal sent from the primary base station before the switchover. The primary base station after the switchover may also perform data backup with a corresponding backup base station. The backup process may be completed by virtue of the communication management layer entity of the application management layer entity. The processes are similar and details are not described herein again.

With respect to the backup base station, if storage space is limited, the backup base station may delete, compress, or permanently store historically stored backup data according to a certain rule. A processing rule is determined according to factors such as category, and retention time of the backup data. When the primary base station is faulty, the backup base station completes sending and receiving responsibilities of the primary base station according to historically backed up data. Generally, the primary base station sends fault information to the backup base station when determining that a fault occurs. Meanwhile, the backup base station also possesses a mechanism of actively detecting whether the primary base station works normally. Specifically, a timer may be started so that when no information from the primary base station is received within a specified time, detection information about whether the primary base station works normally is sent to the primary base station; if no response to the detection information is received, it indicates that the primary base station does not work normally, and the backup base station starts the responsibility of the primary base station.

In the embodiment, the primary base station and the backup base station may adopt double base stations, which may implement double guarantees of transmission validity and reliability through the coordinated multi point transmission/reception (Coordinated Multi Point Transmission/Reception, hereinafter briefly referred to as CoMP) technology and the backup technology.

In the embodiment, the primary base station and the backup base station may perform backup of uplink data and/or downlink data through the communication management layer entity. Once the primary base station is faulty, the backup base station takes over the work of the primary base station to ensure normal work of the backup base station. Therefore, the embodiment can enhance operation reliability of the internet of things and service quality of the internet of things.

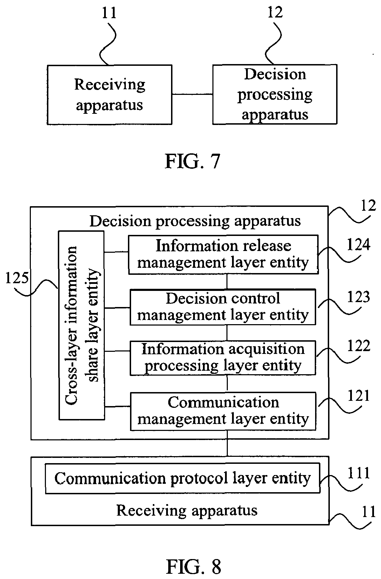

FIG. 7 is a schematic structural diagram of an embodiment of a base station in the present invention. As shown in FIG. 7, the base station of the embodiment may include: a receiving apparatus 11 and a decision processing apparatus 12, where the receiving apparatus 11 is configured to receive uplink data sent from an internet of things terminal; and the decision processing apparatus 12 is configured to: if the uplink data meets a local decision condition of the base station, perform local decision processing according to the uplink data.

The base station of the embodiment may be configured to implement the method of the method embodiment shown in FIG. 1, and implementation principles and technical effects thereof are similar, so details are not described herein again.

FIG. 8 is a schematic structural diagram of another embodiment of a base station in the present invention. As shown in FIG. 8, the base station of the embodiment is based on the structure of the base station in FIG. 7, and may further include: a receiving apparatus 11 that includes a communication protocol layer entity 111; a decision processing apparatus 12 that may include a communication management layer entity 121, an information acquisition processing layer entity 122, a decision control management layer entity 123, an information release management layer entity 124, and a cross-layer information share layer entity125; where the communication protocol layer entity 111 is configured to receive the uplink data sent from the internet of things terminal; the communication management layer entity 121 is configured to receive the uplink data sent from the communication protocol layer entity and send the uplink data to the information acquisition processing layer entity; the information acquisition processing layer entity 122 is configured to categorize and gather the uplink data, acquire category and gathered data, and send the category and gathered data to the decision control management layer entity; the decision control management layer entity 123 is configured to determine whether the category and gathered data meets a local decision condition of the base station; if yes, the decision control management layer entity performs local decision processing for the category and gathered data; the information release management layer entity 124 is configured to receive a decision processing result sent from the decision control management layer entity and send the decision processing result to the internet of things terminal; the cross-layer information share layer entity 125 is configured to provide share parameter information for the communication management layer entity, the information acquisition processing layer entity, and the decision control management layer entity; if the category and gathered data does not meet the local decision condition of the base station, the decision control management layer entity 123 is further configured to send the category and gathered data to the information release management layer entity 124; the information release management layer entity 124 is further configured to send the category and gathered data to a decision processing network element of a core network.

The base station of the embodiment may be configured to implement the method of the method embodiment shown in FIG. 2 or FIG. 4, and implementation principles and technical effects thereof are similar, so details are not described herein again.

Additionally, the communication management layer entity 121 is further configured to forward the downlink data sent from the core network and/or the uplink data sent from the internet of things terminal to the backup base station. It may be configured to implement the process of the method embodiment in FIG. 5 or FIG. 6, and implementation principles and technical effects thereof are similar, so details are not described herein again.

An embodiment of the present invention further provides an internet of things system. In the internet of things system in the embodiment of the present invention, a base station used on an access network may also adopt the base station structure shown in FIG. 7 or FIG. 8, and correspondingly implement the method in FIG. 1, FIG. 2, or FIG. 4. Implementation principles and technical effects thereof are similar, so details are not described herein again.

The following adopts a specific embodiment to detail the internet of things system in the present invention. In the embodiment, a base station may adopt double base stations and each base station in the double base stations may adopt the base station structure in FIG. 7 or FIG. 8.

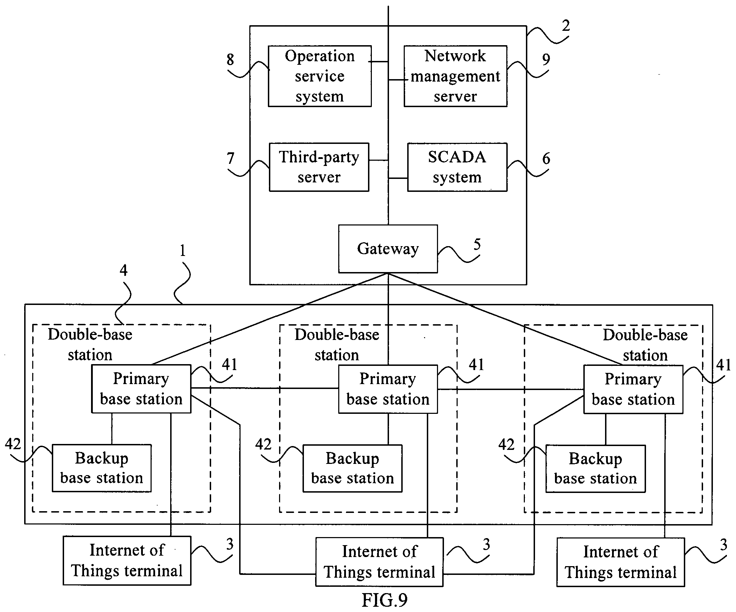

FIG. 9 is a schematic structural diagram of an embodiment of an internet of things system in the present invention. As shown in FIG. 9, the internet of things system in the embodiment may include an access network 1, a core network 2, and an internet of things terminal 3. The access network 1 includes a plurality of double base stationss 4, where a primary base station 41 and a backup base station 42 in the double base stations may adopt the structure in FIG. 7 or FIG. 8, and the interior may possess an application management layer entity in FIG. 3. The primary base station 41 of each double base stations 4 is connected to a gateway 5 of the core network 2, and the backup base station 42 of each double base stations 4 is connected to the primary base station 41. The core network 2 may include an SCADA system 6, a third-party server 7, an operating service system 8, and a network management server 9, where the SCADA system 6, the third-party server 7, the operation service system 8, and the network management server 9 are all connected to the gateway 5 for communicating with the internet of things terminal 3 through the access network 1.

In the internet of things system, the double base stations 4 and the internet of things 3 may communicate with each other by adopting at least one channel among a broadcasting channel, a round robin channel, and a dedicated channel, where the broadcasting channel is used for broadcasting a system message to the internet of things terminal, and the broadcast system message at least includes a downlink broadcasting round robin period and round robin content of each period; the round robin channel is used for the internet of things terminal to periodically report non-real-time information; and the dedicated channel is used for the base station and the internet of things terminal to exchange real-time information

Specifically, the internet of things system of the embodiment may include wireless channels that are different from those in other cellular network systems: the broadcasting channel, the round robin channel, and the dedicated channel. Other wireless channels that have the same function as those in the existing cellular network systems include but are not limited to a synchronous channel and a random access channel. Details are not described herein again.

The broadcasting channel has the similar structure and working principles to the broadcasting channel on other cellular systems, is mainly used for the broadcasting system to broadcast information, and is the downlink transmission channel. In each pair of double base stations communication cells, the broadcasting channel uses a fixed channel code/frequency band, and the difference is that the broadcasting channel in the embodiment is also used for the downlink broadcasting the round robin period and the round robin content of each period, and the like to instruct the internet of things terminal how to use the round robin channel to report information.

The round robin channel is mainly used for the internet of things terminal to periodically report the information whose real time is inferior, for example, a voltage inductance device periodically reports status channel and the like. The round robin channel allocates resources to different internet of things terminals in a plurality of manners such as time frequency manner. After acquiring information of using the round robin channel resource through interaction with signaling of the base station or in a preconfiguration manner, the internet of things terminals send periodical report information in the allocated round robin channel resource.

The dedicated channel is mainly used for network automated service and control information that possess high real time and high reliability requirements, and is separated into an uplink dedicated channel and a downlink dedicated channel, where the downlink dedicated channel is mainly used for double base stations to deliver a system control command that has a very high real time, and the uplink dedicated channel is mainly used for competing for reporting emergent fault information on the internet of things terminal where an emergent fault event appears. To meet communication reliability, the dedicated channel has a special uplink feedback channel and a downlink feedback channel for transmitting an acknowledgement of the downlink dedicated channel and the uplink dedicated channel.

The power distribution network system is taken as an example, where the power distribution network service is categorized into a service that needs an ack (ack) and a service that does not need any ack (no ack). The following describes how to use the foregoing three channels in the two services.

During the process of periodically reporting the information whose real time is inferior, firstly, a power distribution network terminal acquires the round robin channel period and content sent from a base station from a broadcasting channel to determine a condition of usable resources in the round robin channel, and uplink sends service information on the corresponding resource in the round robin channel. If the service needs to be confirmed, the power distribution network terminal needs to wait for an acknowledgement message which is sent from the base station through the downlink feedback channel. During the emergent downlink information transmission process, firstly, a base station sends downlink emergent service information to a corresponding power distribution network terminal through the downlink dedicated channel. If the service needs to be confirmed, the base station needs an acknowledgement message which is sent from the power distribution network terminal through an uplink dedicated feedback channel. The emergent uplink information transmission process is similar to the emergent downlink information transmission process, so details are not described herein again.

Additionally, it should be noted that the internet of things system in the embodiment only gives an example. A person skilled in the prior art may understand that the internet of things system optionally may further include other network elements, for example, a relay needs to be configured on the access network, and the core network may further include other communication devices, which is not restricted in the embodiment. The internet of things in the embodiment may be specific to diverse service applications, such as the power distribution network system, the traffic system, the logistics system, the video surveillance system, or the medical system, each of which respectively correspond to a different internet of things terminal.

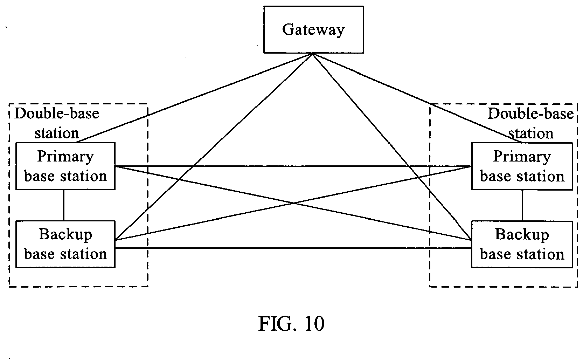

FIG. 10 is a schematic structural diagram of double base stations of another embodiment of an internet of things system in the present invention. As shown in FIG. 10, the difference between the embodiment and the system embodiment shown in FIG. 9 is that the double base stations in the embodiment does not need to distinguish between the primary base station and the backup base station, and the two base stations may be two independent base stations, and each base station in the double base stations may be an independent entity to transmit data between a core network and an internet of things terminal. Compared with the connection manner of the double base stations in the embodiment shown in FIG. 9, reliability is higher.

Further embodiments of the present invention are provided in the following. It should be noted that the numbering used in the following section does not necessarily need to comply with the numbering used in the previous sections.

Embodiment 1. An internet of things information processing method, characterized in comprising:
receiving, by a base station, uplink data sent from an internet of things terminal;
performing, by the base station, local decision processing according to the uplink data if the uplink data meets a local decision condition of the base station.

Embodiment 2. The method according to embodiment 1, characterized in that the receiving, by the base station, uplink data sent from the internet of things terminal comprises:
receiving, by a communication protocol layer entity of the base station, the uplink data sent from the internet of things terminal; and
receiving, by an application management layer entity of the base station, the uplink data sent from the communication protocol layer entity;
wherein the performing, by the base station, the local decision processing according to the uplink data if the uplink data meets the local decision condition of the base station comprises;
determining, by the application management layer entity of the base station, whether the uplink data meets the local decision condition of the base station; and if yes, performing, by the application management layer entity of the base station, the local decision processing according to the uplink data.

Embodiment 3. The method according to embodiment 2, characterized in that the application management layer entity comprises: a communication management layer entity, an information acquisition processing layer entity, and a decision control management layer entity;
wherein the receiving, by the application management layer entity of the base station, the uplink data sent from the communication protocol layer entity comprises:
receiving, by the communication management layer entity, the uplink data sent from the communication protocol layer entity; and
wherein the determining, by the application management layer entity of the base station, whether the uplink data meets the local decision condition of the base station; and performing, by the application management layer entity of the base station, the local decision processing according to the uplink data if the uplink data meets the local decision condition of the base station comprises:
   receiving, by the information acquisition processing layer entity, the uplink data sent from the communication management layer entity, categorizing and gathering the uplink data, and acquiring the category and gathered data, and sending the category and gathered data to the decision control management layer entity; and
   determining, by the decision control management layer entity, whether the category and gathered data meets the local decision condition of the base station; if yes, performing, by the decision control management layer entity, the local decision processing for the category and gathered data.

Embodiment 4. The method according to embodiment 3, characterized in that the application management layer entity further comprises an information release management layer entity; and
after the performing, by the decision control management layer entity, the local decision processing for the category and gathered data, further comprising:
sending, by the decision control management layer entity, a decision processing result to the information release management layer entity; and
sending, by the information release management layer entity, the decision processing result to the internet of things terminal.

Embodiment 5. The method according to embodiment 4, characterized in that if the category and gathered data does not meet the local decision condition of the base station, the method further comprises:
sending, by the decision control management layer entity, the category and gathered data to the information release management layer entity; and
sending, by the information release management layer entity, the category and gathered data to a decision processing network element of a network side.

Embodiment 6. The method according to any one of embodiments 3 to 5, characterized in that the application management layer entity further comprises a cross-layer information share layer entity; and
the categorizing and gathering, by the information acquisition processing layer entity, the uplink data comprises:
categorizing and gathering, by the information acquisition processing layer entity, the uplink data according to share parameter information provided by the cross-layer information share layer entity.

Embodiment 7. The method according to embodiment 6, characterized in that the share parameter information comprises correspondence between type information and an application service type of the internet of things terminal; and
the categorizing and gathering, by the information acquisition processing layer entity, the uplink data according to share parameter information provided by the cross-layer information share layer entity comprises:
determining, by the information acquisition processing layer entity, type information of the internet of things according to the uplink data, determining, according to the correspondence, an application service type to which the type information corresponds, and allocating and gathering the uplink data of the same application service type.

Embodiment 8. The method according to any one of embodiments 1 to 5 and embodiment 7, characterized in that the uplink data meets the local decision condition of the base station comprises:
the base station is capable of acquiring all parameters required for performing local decision processing according to the uplink data.

Embodiment 9. The method according to any one of embodiments 3 to 5, characterized in further comprising:
forwarding, by the communication management layer entity, downlink data sent from a network side, the uplink data sent from the internet of things terminal, or switchover data sent from another base station to a backup base station.

Embodiment 10. The method according to any one of embodiments 1 to 5, characterized in that the internet of things terminal comprises:
a power distribution network terminal, a traffic terminal, a logistics terminal, a video surveillance terminal, or a medical terminal.

Embodiment 11. A base station, characterized in comprising:
a receiving apparatus, configured to receive uplink data sent from an internet of things terminal; and
a decision processing apparatus, configured to perform local decision processing according to the uplink data if the uplink data meets a local decision condition of the base station.

Embodiment 12. The base station according to embodiment 11, characterized in that the receiving apparatus comprises: a communication protocol layer entity, an information acquisition processing layer entity, and a decision control management layer entity;
the communication protocol layer entity is configured to receive the uplink data sent from the internet of things terminal;
the communication management layer entity is configured to receive the uplink data sent from the communication protocol layer entity and send the uplink data to the information acquisition processing layer entity;
the information acquisition processing layer entity is configured to categorize and gather the uplink data, acquire category and gathered data, and send the category and gathered data to the decision control management layer entity; and
the decision control management layer entity is configured to determine whether the category and gathered data meets the local decision condition of the base station; if yes, the decision control management layer entity performs the local decision processing for the category and gathered data.

Embodiment 13. The base station according to embodiment 12, characterized in that the decision processing apparatus further comprises:
an information release management layer entity, configured to receive a decision processing result sent from the decision control management layer entity and send the decision processing result to the internet of things terminal.

Embodiment 14. The base station according to embodiment 13, characterized in that the decision control management layer entity is further configured to: if the category and gathered data does not meet the local decision condition of the base station, send the category and gathered data to the information release management layer entity; and
the information release management layer entity is further configured to send the category and gathered data to a decision processing network element of a network side.

Embodiment 15. The base station according to any one of embodiments 12 to 14, characterized in that the decision processing apparatus further comprises:
a cross-layer information share layer entity, configured to provide share parameter information for the communication management layer entity, the information acquisition processing layer entity, and the decision control management layer entity.

Embodiment 16. The base station according to any one of embodiments 12 to 14, characterized in that the communication management layer entity is further configured to send downlink data sent from a network side, the uplink data sent from the internet of things terminal, or switchover data sent from another base station to a backup base station.

Embodiment 17. An internet of things system, characterized in comprising an access network and a core network, wherein a base station on the access network adopts a base station according to any one of embodiments 11 to 16.

Embodiment 18. The system according to embodiment 17, characterized in that the base station is any one of double base stations.

Embodiment 19. The system according to embodiment 17 or 18, characterized in that the base station and an internet of things terminal communicate with each other by adopting at least one channel among a broadcasting channel, a round robin channel, and a dedicated channel;
the broadcasting channel is used for broadcasting a system message to the internet of things terminal, wherein the broadcast system message at least comprises a downlink broadcasting round robin period and round robin content of each period;
the round robin channel is used for the internet of things terminal to periodically report non-real-time information; and
the dedicated channel is used for the base station and the internet of things terminal to exchange real-time information.

Embodiment 20. The system according to embodiment 17 or 18, characterized in that the internet of things system is a power distribution network system, a traffic system, a logistics system, a video surveillance system, or a medical system.

Aperson of ordinary skill in the art should understand that all or part of the steps of the foregoing method embodiments may be completed by a computer program instructing relevant hardware. The foregoing program may be stored in a computer readable storage medium. When the program runs, the steps included in the method embodiments are performed. The foregoing storage medium may be any medium capable of storing program codes, such as a ROM, a RAM, a magnetic disk, or an optical disk.

Finally, it should be noted that the foregoing embodiments are merely intended for describing the technical solutions of the present invention rather than limiting the present invention. Although the present invention is described in detail with reference to the foregoing embodiments, a person of ordinary skill in the art should understand that they may still make modifications to the technical solution described in the foregoing embodiments or make equivalent replacements to some technical features thereof without departing from the spirit and scope of the technical solution of the embodiments of the present invention.

## Claims

1. An apparatus, **characterized by** comprising:
means for receiving uplink data from an internet of things terminal;
means for performing local decision processing according to the uplink data in response to the uplink data meets a local decision condition of a base station.

2. The apparatus according to claim 1, wherein the means for receiving uplink data from the internet of things terminal, comprises:
a communication protocol layer entity, configured to receive the uplink data from the internet of things terminal; and
an application management layer entity, configured to receive the uplink data from the communication protocol layer entity;
wherein the means for performing the local decision processing according to the uplink data in response to the uplink data meets the local decision condition of the base station comprises:
the application management layer entity, further configured to determine whether the uplink data meets the local decision condition of the base station; and if yes, perform the local decision processing according to the uplink data.

3. The apparatus according to claim 2, wherein the application management layer entity comprises: a communication management layer entity, an information acquisition processing layer entity, and a decision control management layer entity;
the communication management layer entity, configured to receive the uplink data from the communication protocol layer entity; and
the information acquisition processing layer entity, configured to receive categorizing and gathering the uplink data, and acquire the category and gathered data, and send the category and gathered data to the decision control management layer entity; and
the decision control management layer entity, configured to determine whether the category and gathered data meets the local decision condition of the base station; if yes, perform the local decision processing for the category and gathered data.

4. The apparatus according to claim 3, wherein the application management layer entity further comprises an information release management layer entity; and
the decision control management layer entity, further configured to send a decision processing result to the information release management layer entity; and
the information release management layer entity, configured to send the decision processing result to the internet of things terminal.

5. The apparatus according to claim 4, wherein the category and gathered data does not meet the local decision condition of the base station,
the decision control management layer entity, further configured to send the category and gathered data to the information release management layer entity; and
the information release management layer entity, further configured to send the category and gathered data to a decision processing network element of a network side.

6. The apparatus according to any one of claims 3 to 5, wherein the application management layer entity further comprises a cross-layer information share layer entity; and
the information acquisition processing layer entity, further configured to category and gather, by the uplink data according to share parameter information provided by the cross-layer information share layer entity.

7. The apparatus according to claim 6, wherein the share parameter information comprises correspondence between type information and an application service type of the internet of things terminal; and
the information acquisition processing layer entity, further configured to determine type information of the internet of things according to the uplink data, determining, according to the correspondence, an application service type to which the type information corresponds, and allocating and gathering the uplink data of the same application service type.

8. The apparatus according to any one of claims 1 to 5 and claim 7, wherein the uplink data meets the local decision condition of the base station comprises:
the base station is capable of acquiring all parameters required for performing local decision processing according to the uplink data.

9. The apparatus according to any one of claims 3 to 5, wherein comprising:
the communication management layer entity, further configured to forward downlink data from a network side, the uplink data from the internet of things terminal, or switchover data from another base station to a backup base station.

10. The apparatus according to any one of claims 1 to 5, wherein the internet of things terminal comprises:
a power distribution network terminal, a traffic terminal, a logistics terminal, a video surveillance terminal, or a medical terminal.
